(19) **Europäisches Patentamt** / **European Patent Office** / **Office européen des brevets**

(11) **EP 4 748 803 A1**

(12) # EUROPEAN PATENT APPLICATION

(43) Date of publication:
27.05.2026 Bulletin 2026/22

(21) Application number: 25217209.3

(22) Date of filing: 20.11.2025

(51) International Patent Classification (IPC):
**C03B 3/02** (2006.01)   **C03B 5/00** (2006.01)
**C03B 5/24** (2006.01)   **F27D 17/18** (2025.01)
**F28D 7/16** (2006.01)   **F28F 5/02** (2006.01)

(52) Cooperative Patent Classification (CPC):
**C03B 3/023; C03B 5/005; C03B 5/24; F27D 17/18; F28F 5/02;** F27D 2013/007; F28D 2021/0045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 26.11.2024 US 202463725139 P

(71) Applicant: **Alexander, Jeffrey C.
Newbury, MA 01951 (US)**

(72) Inventor: **Alexander, Jeffrey C.
Newbury, MA 01951 (US)**

(74) Representative: **Uexküll & Stolberg
Partnerschaft von
Patent- und Rechtsanwälten mbB
Beselerstraße 4
22607 Hamburg (DE)**

(54) **ROTARY BATCH AND CULLET PREHEATER SYSTEM CONTROL APPARATUS AND PROCESS THEREFOR**

(57)   Control system and method for controlling the amount of material fed to a glass furnace from a rotatable chamber of a rotary heat-exchanger having a rotatable chamber variable frequency drive in communication with a rotatable chamber motor for rotating said rotatable chamber. The control system may include a material feeder in communication with the rotatable chamber; a driver for the material feeder including a feeder variable frequency drive and a feeder motor associated with the feeder variable frequency drive; a controller in communication with the feeder variable frequency drive and with the chamber variable frequency drive and configured to modify the speed of the material feeder in response to a signal generated by the chamber variable frequency drive indicative of a torque required to rotate the rotatable chamber.

FIG. 1

EP 4 748 803 A1

## Description

This application claims priority of U.S. provisional application Serial No. 63/725,139 filed on November 26, 2024, the disclosure of which is hereby incorporated by reference in its entirety.

## BACKGROUND OF THE INVENTION

Embodiments disclosed herein relate to a method for preheating raw materials for glass manufacture using waste heat from the glass melting process.

Glass is made by heating and melting a mixture of solid raw materials to a liquid state. The melting is done inside of a furnace and necessarily requires substantial amounts of heat. Typically, this heat is generated by the combustion of fossil fuels and the exhaust gases from the combustion leave the furnace. Exhaust gas temperatures immediately after the furnace are quite high, typically 1350-1450°C. In some cases, combustion air preheaters are included which recover some of the heat in these gases. Even so, gas temperatures at the discharge to atmosphere are quite high, thus substantial amounts of heat are wasted. The cost of fuel for heating the furnace is a major component in the cost of making glass.

The raw materials for glass are typically referred to as batch and cullet. The word batch generally refers to an assemblage of various pulverous materials including silica sand, limestone, soda ash, salt cake, and a variety of other minor ingredients. The material and mixture ratios are carefully chosen to produce glass of the desired properties and quality. Generally, these materials are prepared in a finely divided form to promote their melting rates. Sizes are typically 100 to 200 $\mu$m diameter with a maximum size of 1 mm.

The word cullet generally refers to recycled glass, either from the factory or from external sources. Cullet from the factory is typically less than 10% of the production rate of the furnace and is generated by product breakage, or product rejected due to defects. Factory cullet is gathered from the various sources in the plant, crushed to sizes less than 100 mm and collected in a central storage hopper.

Cullet from external sources, referred to as Post-Consumer Recycle (PCR) cullet generally comes from glass bottle recycling programs in the community. The amount of PCR cullet in each furnace can vary widely, from as little as 0% of production rate up to 80%. PCR cullet is generally laden with impurities such as organic residues, paper, plastics, and other non-glass materials deposited into recycling containers. PCR cullet is delivered to the glass factory by truck or rail carriers from the recycling centers. PCR cullet is normally delivered in a coarse crushed form of size less than 100 mm.

The batch, factory cullet and PCR cullet are typically blended before introduction to the melting furnace.

Embodiments disclosed herein can be advantageously used to preheat the batch and the cullet using heat from exhaust gases such as those from the combustion of fossil fuel(s) typically resulting from the production of glass, and results in an improved glass melting process. By preheating these materials before they are introduced to the furnace, the amount of fuel required for heating and melting them can be reduced. This fuel reduction can represent a substantial economic benefit to the glass making process and reduces the emission of harmful gases (such as NOx and $CO_2$) simply because less fuel is burned.

Fossil fuel fired glass furnaces are of several different designs. When air is combusted with fuel, the air is typically preheated in regenerative or recuperative heat exchangers to preheat the combustion air utilizing some of the waste heat exiting the furnace. When nominally pure oxygen is used for combustion, no waste heat recovery equipment is typically involved. Such furnaces are termed oxyfuel fired.

While embodiments disclosed herein could be advantageously applied to any of the glass production schemes, its benefits are greatest in the case of oxyfuel fired furnaces. This is because exhaust gas temperatures are higher, thus batch and cullet can be preheated to high temperatures, and because reduction in fuel requirements for the furnace is accompanied by a proportional reduction in the oxygen supply (and thus cost) for the furnace.

## SUMMARY

Embodiments disclosed here are an improvement over embodiments disclosed in U.S. Patent No. 12,084,375 entitled "Rotary Batch and Cullet Preheater System and Method", the disclosure of which is hereby incorporated by reference.

In certain embodiments, the rotary batch and cullet preheater system may be comprised of:

1. Gas Inlet and outlet plenums to direct hot gases through a heat exchanger in a rotatable chamber, the heat exchanger preferably having one or more heat exchanger tubes;

2. The rotatable chamber configured to contain a quantity of the material to be heated, said rotatable chamber including:

a. a heat exchanger having one or more tubes for hot gases to flow through, heat being transferred from the hot gases, through one or more tube walls of the one or more tubes and into the material in the rotatable chamber, and one or more shovels to aid in the discharge of material from the rotatable chamber;

b. a driver such as a motor with associated equipment to rotate the rotatable chamber;

c. a controller to control the speed of the rotatable chamber driver, configured to accept an electrical signal proportional to the desired speed of the driver; and

d. a device configured to provide an electrical signal proportional to the torque required to rotate the rotatable chamber;

3. An infeed hopper periodically supplied with material to be heated from a source of material;.

4. An infeed feeder such as a screw feeder, configured to receive material from said infeed hopper and to discharge material to the interior of the rotatable chamber, said feeder including, in certain embodiments:

a. a rotatable auger, and

b. a feeder driver such as a motor with associated equipment to rotate the auger, and

c. a controller to control the speed of the feeder driver (and thus the feeder/rotatable auger), configured to accept an electrical signal proportional to the desired speed of the feeder driver;

5. A discharge hopper to receive material from the rotatable chamber, including:

a. a device to determine the level of material in the discharge hopper and provide an electrical signal proportional to that level;

6. A process feeder configured to receive material from said discharge hopper and discharge material to a glass furnace, including, in certain embodiments:

a. mechanical equipment with driving equipment (e.g., a furnace driver feeder) to feed material into the furnace, and

b. a controller to control the driving equipment, configured to accept an electrical signal proportional to the desired speed or intensity of the driving equipment;

7. A process container, in certain embodiments a glass furnace, including:

a. a device to determine the level of material in the process container and provide an electrical signal proportional to that level; and

b. a controller configured to accept the electrical signal (e.g., in electrical communication with the device to determine the level of material) and regulate the amount of material introduced into the process container.

In certain embodiments, the control system may be comprised of one or more of:

a. A Control Loop for controlling the amount of material inside a rotatable chamber, in certain embodiments the Control Loop having:

i. Process Variable (PV) = Rotatable Chamber Torque (torque being a proxy for the material level in the rotatable chamber)

ii. Control Variable (CV) = Infeed Speed

iii. Set Point (SP) = Value of Rotatable Chamber Torque that corresponds to a desired, predetermined or optimum fill level of the rotatable chamber (e.g., this optimum fill level may be a level in the rotatable chamber as high as possible without resulting in the infeed being blocked, which can be determined, for example, by trial-and-error or known from prior experience).

b. A Control Loop configured to control the amount of material inside the discharge hopper, in certain embodiments this Control Loop having:

i. Process Variable (PV) = Discharge Hopper Material Level

ii. Control Variable (CV) = Rotatable Chamber Motor Speed (i.e., the rotational speed of the rotatable chamber)

iii. Set Point (SP) = Value Discharge Hopper Level corresponding to a desired, predetermined or optimum fill level (e.g., this optimum fill level in the discharge hopper may be a level greater than zero and less than the amount that blocks the discharge into the rotatable chamber, which can be determined, for example, by trial-and-error or known from prior experience).

    c. A Control Loop also configured to control the amount of product glass material in the glass furnace, in certain embodiments having:

        i. Process Variable (PV) = Glass Level in Furnace
        ii. Control Variable (CV) = Speed or Intensity of Driving Equipment for the glass furnace Process Feeder.
        iii. Set Point (SP) = Value of Glass Level corresponding to a desired, predetermined or optimum level (the optimum level is fundamental to the design of the glass furnace and is determined by the designer in advance of construction, as known in the art).

Accordingly, certain embodiments relate to a control system or systems for controlling the amount of material fed to a glass furnace from a rotatable chamber of a rotary heat-exchanger having a rotatable chamber variable frequency drive in communication with a rotatable chamber motor for rotating said rotatable chamber, the control system comprising:

    a material feeder in communication with said rotatable chamber;
    a driver for said material feeder including a feeder variable frequency drive and a feeder motor associated with the feeder variable frequency drive;
    a controller in communication with said feeder variable frequency drive and with said chamber variable frequency drive and configured to modify the speed of said material feeder in response to a signal generated by said chamber variable frequency drive indicative of a torque required to rotate said rotatable chamber.

Certain embodiments relate to a control system for controlling the amount of material fed to a glass furnace from a rotatable chamber of a rotary heat-exchanger wherein a discharge hopper is in communication with said rotatable chamber and with said glass furnace, said control system comprising:

    a hopper level measurer configured to measure the level of said material in said discharge hopper;
    wherein said controller is in communication with said hopper level measurer and with said rotatable chamber variable frequency drive and is configured to modify the speed of said rotatable chamber in response to a signal generated by said hopper level measurer indicative of the level of said material in said discharge hopper.

This latter control system may be used in combination with the first control system described above.
In some embodiments, either or both of the aforementioned control systems may further comprise:

    a glass furnace measure leveler configured to measure the level of said material in said glass furnace; and
    a glass furnace feeder in communication with said discharge hopper and with said glass furnace and having a glass furnace feeder driver;
    wherein said controller is in communication with said glass furnace level measurer and with said glass furnace feeder driver and is configured to modify the speed of said glass furnace feeder driver in response to a signal generated by said glass furnace measure leveler indicative of the level of said material in said glass furnace.

Also disclosed are methods for controlling the amount of material fed to a glass furnace from a rotatable chamber of a rotary heat-exchanger having a rotatable chamber variable frequency drive in communication with a rotatable chamber motor for rotating the rotatable chamber. In certain embodiments the method comprises:

    generating a signal with the chamber variable frequency drive indicative of a torque required to rotate the rotatable chamber;
    driving a material feeder having a feeder variable frequency drive and a motor associated with the variable frequency drive to feed the material into the rotatable chamber;
    controlling the speed of the material feeder with the variable frequency drive in response to the sensed signal indicative of the torque.

In certain embodiments, a discharge hopper is in communication with the rotatable chamber and with the glass furnace, and the method further comprises:

    measuring the level of the material in the discharge hopper; and
    controlling the speed of the rotatable chamber in response to a signal generated by the hopper level measurer indicative of the level of the material in the discharge hopper by controlling the chamber variable frequency drive.

In certain embodiments, either or both of the aforementioned methods may further comprise:

measuring the level of the material in the glass furnace; and
feeding the material into the glass furnace with a glass furnace feeder in communication with the discharge hopper and with the glass furnace, the glass furnace feeder having a glass furnace feeder driver; and

controlling the speed of the glass furnace feeder driver in response to the measured level of material in the glass furnace.
In certain embodiments, disclosed is a method for controlling the amount of material fed to a glass furnace from a rotatable chamber of a rotary heat-exchanger wherein a discharge hopper is in communication with the rotatable chamber having a rotatable chamber variable frequency drive in communication with a rotatable chamber motor for rotating the rotatable chamber and is in communication with the glass furnace. In certain embodiments the method comprises:

measuring the level of the material in the discharge hopper; and
controlling the speed of the rotatable chamber in response to a signal generated by the hopper level measurer indicative of the level of the material in the discharge hopper by controlling the chamber variable frequency drive. In certain embodiments, this method may further comprise:
measuring the level of the material in the glass furnace; and
feeding the material into the glass furnace with a glass furnace feeder in communication with the discharge hopper and with the glass furnace, the glass furnace feeder having a glass furnace feeder driver; and

controlling the speed of the glass furnace feeder driver in response to the measured level of material in the glass furnace.
Those skilled in the art appreciate in certain embodiments, one or more controllers may be used, and each controller may be a PID (proportional-integral-derivative) controller. A PID controller is an instrument that receives input data (e.g., from sensors (e.g., is in electrical communication with sensors)), calculates the difference between the actual value and a desired setpoint, and adjusts outputs to control variables. It does this through three mechanisms: proportional control, which reacts to current error; integral control, which addresses accumulated past errors; and derivative control, which predicts future errors. The PID controller sums those three components to compute the output. Thus, in a PID control system, a Process Variable (PV) is the actual measured value of a system parameter being controlled, a Control Variable (CV) is the output signal that the PID controller adjusts to influence the Process Variable, and the Set Point (SP) is the desired or target value that the Process Variable should reach and maintain.
For any such control system disclosed herein, a suitable controller may be used, such as a controller having a processing unit and a storage element. The processing unit may be a general-purpose computing device such as a microprocessor. Alternatively, it may be a specialized processing device, such as a programmable logic controller (PLC) or a proportional-integral-derivative controller (PID). The storage element may utilize any memory technology, such as RAM, DRAM, ROM, Flash ROM, EEROM, NVRAM, magnetic media, or any other medium suitable to hold computer readable data and instructions. The controller unit may be in electrical communication (e.g., wired, wirelessly) with one or more of the operating units in the system, including one or more actuators, sensors, motors, etc. The controller also may be associated with a human machine interface or HMI that displays or otherwise indicates to an operator one or more of the parameters involved in operating the system and/or carrying out the methods described herein. The storage element may contain instructions, which when executed by the processing unit, enable the system to perform the functions described herein. In some embodiments, more than one controller may be used.
In certain embodiments, the three aforementioned control systems are cascaded.
In certain embodiments, of primary importance is the maintenance of the glass level in the glass furnace to assure proper function of downstream production equipment. Accordingly, during operation the furnace driver feeder should always have material available to it, e.g., the discharge hopper level must be maintained at a certain level so that it does not fall too low, and should not be too high so that it blocks material discharge from the rotatable chamber).
In certain embodiments, it also is important to maintain a proper material level in the rotatable chamber to optimize heat transfer to the material in the rotatable chamber, and to ensure that the rotatable chamber is not overfilled with material to so as to avoid blocking the infeed.
In certain embodiments, the operation logic is:

a. Glass furnace feeder driver will vary to maintain constant glass level in the glass furnace, causing the discharge hopper level to vary;
b. Rotatable chamber rotational speed will then vary to maintain constant discharge hopper level, causing the rotatable chamber material level to vary; and
c. Infeed rate will vary to maintain a constant rotational chamber material level.

With all three of the aforementioned control systems functioning, the material level in the glass furnace will remain constant; the discharge hopper level will remain constant; and the rotational chamber material level will remain constant.

## BRIEF DESCRIPTION OF THE DRAWINGS

The above and other aspects of the embodiments disclosed herein will now be described in further detail, by way of example only, with reference to the accompanying drawings, in which:

FIG. 1 is a flow diagram of a method for control of a Rotating Batch and Cullet Preheater System in accordance with certain embodiments;
FIG. 2A is a cross-sectional side view of a rotatable chamber showing material fill inside in accordance with certain embodiments;
FIG. 2B is a cross-section view showing a plurality of shovels in accordance with certain embodiments;
FIGS. 3A and 3B are cross-sectional views of a rotatable chamber showing material fill inside in accordance with certain embodiments;
FIG. 4 is a graph of the material quantity in a rotatable chamber vs. the rotation drive motor torque for a typical sized device in accordance with certain embodiments; and
FIG. 5 is a graph of the material quantity in a rotatable chamber vs. the depth of material for a typical sized device in accordance with certain embodiments.

## DETAILED DESCRIPTION

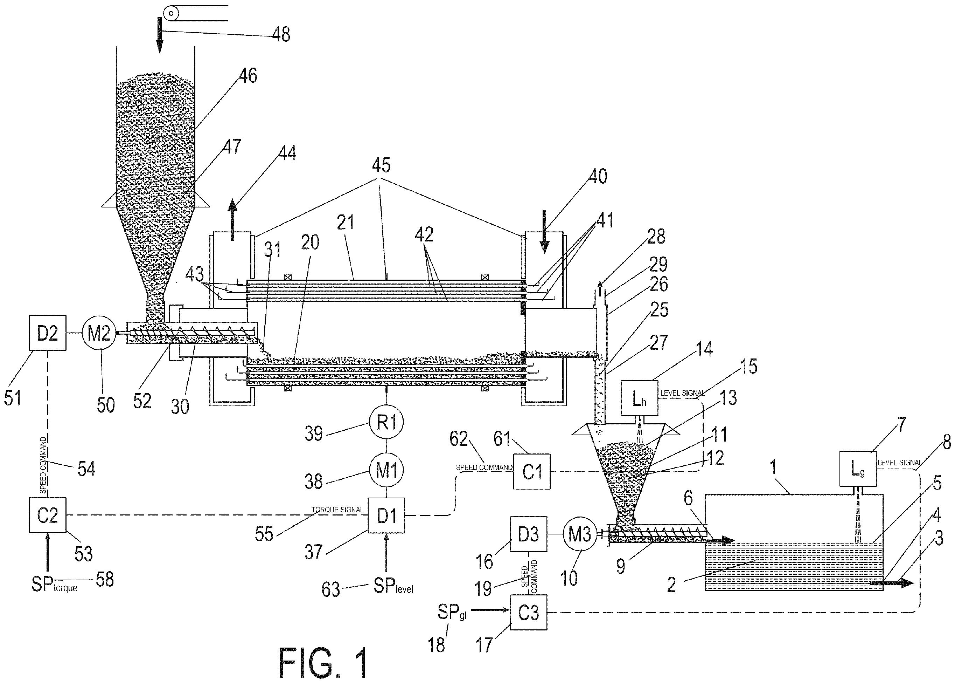

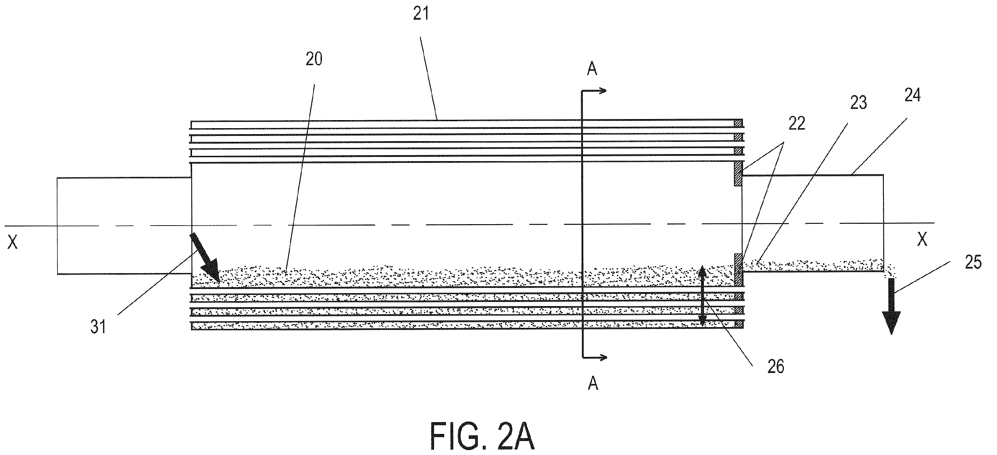

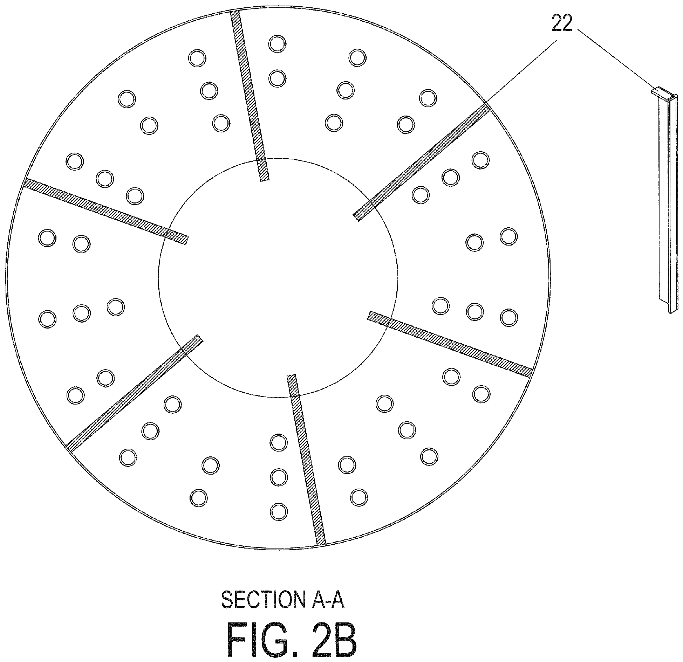

In accordance with certain embodiments, FIG. 2 is a depiction of a rotatable chamber 21 that is part of an overall system such as that depicted in FIG. 1. In certain embodiments, the rotatable chamber 21 is rotatable about longitudinal axis x-x shown in FIG. 2, such as an axis bisecting the chamber 21. In the embodiment shown, the rotatable chamber **21** contains or is adapted to contain material **20**. During operation, material **20** may be continuously introduced into the rotatable chamber **21** as depicted by arrow **31** such as by a feeder, such as an infeed screw feeder (FIG. 1) or the like. In certain embodiments, one or more shovels **22** may be configured and positioned to aid in lifting material **20** from the rotatable chamber **21** and depositing it at **23** in outlet cylinder **24**. As best seen in FIG. 2B, in certain embodiments a shovel **22** may be an elongated L-shaped portion terminating in a free end with a flange that cooperates with the elongated L-shaped portion to create a scoop or shovel. In certain embodiments, the material **20** travels along the bottom of outlet cylinder **24** until it discharges at an outlet such as by dropping out at **25** of an outlet cylinder 24. For example, material **20** continuously discharges at **25** from the rotatable chamber **21**. The discharge rate, $R_d$ (kg/h), that the material **20** exits at **25** the rotatable chamber **21** depends on the depth d (m) **26** of material **20** in the rotatable chamber **21** and the rotational speed $\omega_c$ (revolutions per minute, rpm) **28** of the rotatable chamber **21**. The depth **26** of material **20** in the rotatable chamber **21** is directly related to the quantity or mass of material **20,** termed $m_c$ (kg), inside the rotatable chamber **21**. The quantity or mass of material $m_c$ **20** in rotatable chamber **21** vs. depth d (m) can be calculated by straightforward geometrical calculations. For a rotatable chamber of length $l_o$ (m) and radius $r_o$ (m) filled with material **20** of density $\rho_m$ (kg/m$^3$), the equation below will give the mass $m_c$ of material **20** in the chamber **21**.

$$m_c = \rho_m * l_o * r_o^2 * \cos^{-1}(1 - d/r_o) - (1 - d/r_o) * \sin[\cos^{-1}(1 - d/r_o)]$$

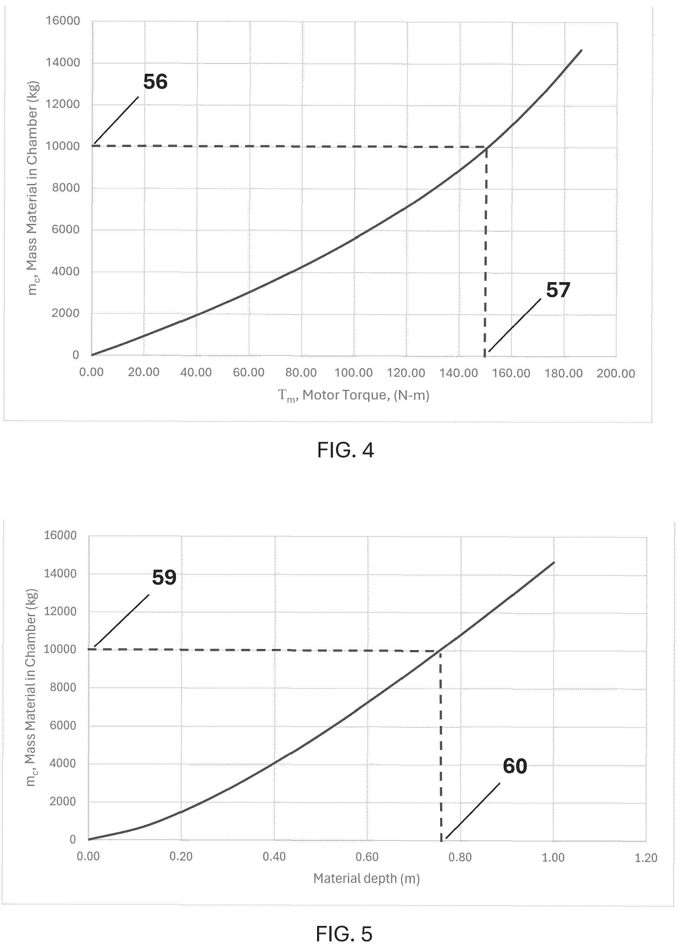

FIG. **5** shows results of such calculations for a Rotary Preheater of typical size according to the following dimensions and material parameters:

Radius of Chamber = $r_o$ = 1.25 m
Length of Chamber = $l_o$ = 5.0 m
Density of Material Fill = $\rho_m$ = 1700 kg/m$^3$
Angle of Repose of Material = $\theta_r$ = 35°
Reduction Ratio of Drive Equipment = $N_r$ = 300

In this example, a chamber filled with 10000 kg **59** will have a material depth **60** of 0.76 m.
If the amount of material **20** inside the chamber **21** is constant, the discharge rate $R_d$ at **25** is then linearly related to the rotational speed **28** of the chamber **21** and can be calculated as follows:

$$R_d = \text{Constant} * \omega_c$$

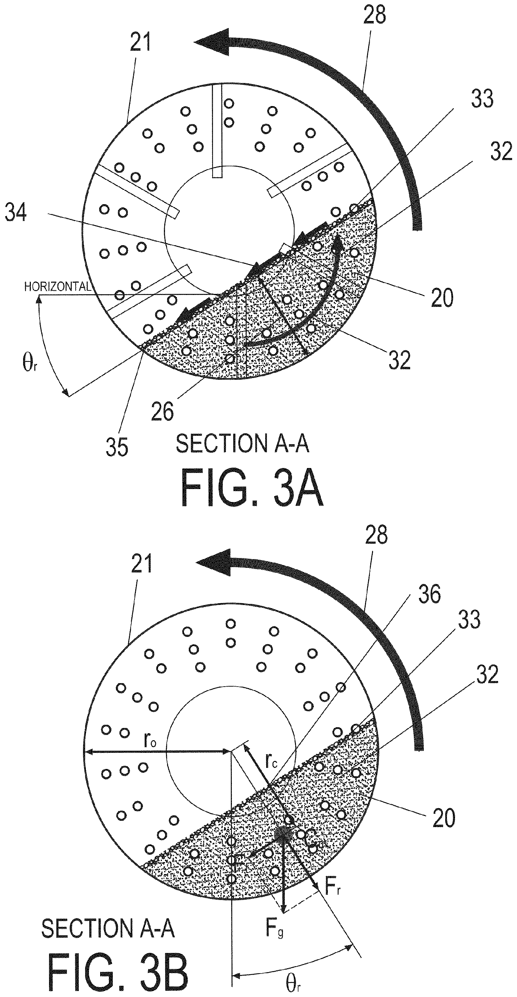

With reference to FIG. **3A,** discussion is made about material fill physics. Necessarily, the material is dry and free flowing. As the chamber **21** is rotated as depicted by arrow **28,** the material **20** is carried as shown by arrow **32** with the rotation until the surface of the material **33** reaches its angle of repose $\theta_r$. Material will then slide over the surface as illustrated at **34** until it reaches the bottom **35** of the surface. Because of the angle of repose/sliding action of the material, the profile of material fill will remain the same, no matter how fast the chamber is rotating.

The mass $m_c$ of material **20** in the chamber is not directly measurable, so it is not possible to use this parameter in a control scheme. However, because of the above-described material movement, a measurable parameter can be found that is related directly to the amount of material $m_c$.

Referring to FIG. **3B,** for analysis the material center of mass $C_m$ is identified. The center of mass is a distance $r_c$ from the center of the rotatable chamber **21.** Then gravity acts on the material with a force $F_g$.

$$F_g = m_c * g$$

where $m_c$ is the mass of material in the chamber and g (=9.8 N/kg) is the gravitational constant. Vector analysis may be used to breakdown the force into two perpendicular components, the radial force $F_r$ and the tangential force $F_t$:

$$F_t = F_g * \sin \theta_r$$

$$F_r = F_g * \cos \theta_r$$

The torque required to elevate the material $m_c$ in the rotatable chamber **21** is defined as $T_c$ where:

$$T_c = F_t * r_c = m_c * g * \sin \theta_r * r_c$$

It can thus be seen that the torque $T_c$ is monotonically related to the mass of material $m_c$ in the chamber **21.** Since the profile of material due to angle of repose is not affected by rotational speed, the torque is independent of of rotational speed $\omega_c$. As a result, if constant torque $T_c$ on the rotatable chamber **21** is maintained, constant $m_c$ will be maintained.

Drive motor M1 torque $T_m$ can sometimes be output directly from the motor variable frequency drive D1. Otherwise, motor torque can be calculated from the power $P_m$ (kW) and rotational frequency $\omega_m$ (rpm) of the motor according to the following equation, both parameters that are commonly available from the variable frequency driveD1:

$$T_m (N\text{-}m) = 9549 * P_m (kW) / \omega_m (rpm)$$

In certain embodiments, the motor M1 driving the rotatable chamber **21** is operatively connected to the chamber such as by a system of gears, chains, and sprockets **39** with a speed reduction ratio of $N_r$. Every revolution of the rotatable chamber **21** requires $N_r$ revolutions of the drive motor M1. Then the rotatable chamber **21** torque is related to the motor M1 torque as follows:

$$T_c = N_r * T_m$$

Using the above equations, the quantity $m_c$ of material in chamber **21** vs. motor torque, $T_m$, for the Rotary Preheater of typical size detailed above can be determined.

FIG. 3B shows the geometric relationships which allow us to calculate $T_c$ for a given amount of material fill $m_c$ in the chamber. The center of mass $C_m$ will be the centroid of shaded region **20** (the material fill). Determination of the centroid of complex shapes is well developed in mathematics, generally determined by the method of composite parts or by calculating the first moment integral of the shape. Once the centroid of the shape is determined, we can calculate the distance $r_c$ of $C_m$ from the center of the chamber. Then calculate the motor torque by combining above equations:

$$T_m = [ m_c * g * \sin \theta_r * r_c ] / N_r$$

Using the sample parameters detailed above and a drive reduction ratio $N_r = 300$, a graph of $m_c$ vs. $T_m$ is shown in FIG. **4.** Similar graphs can be produced for different sets of dimensions and parameters, but the principles and shape of the curve will be the same. From this graph, the calculated (e.g., such as with the variable frequency drive D1 from the measured power and speed) motor torque $T_m$ can be used to determine the amount $m_c$ of material **20** in the chamber **21.** The relationship between them is monotonic, so $T_m$ can be used as a controlling proxy for $m_c$.

It is important for the operation and control of the preheater that the amount $m_c$ of material in the chamber **21** be maintained at the proper level and remain constant or substantially constant (e.g., as close to constant as possible within the variations inherent in the PID controller).

- If $m_c$ is too large, the level of material in the chamber **21** will be so high that discharge from the feeder 30 will be blocked.
- If $m_c$ is constant or substantially constant, then the discharge rate $R_d$ will be proportional to the chamber rotational velocity $\omega_c$, enabling the entire control scheme presented here.
- If $m_c$ is too low, $\omega_c$ will need to be excessive to achieve an acceptable discharge rate.
- If $m_c$ is held at its optimum level (e.g., as much mass as possible without blocking the infeed), the heat transfer to the material will be optimized.

A description of the preheater system in accordance with certain embodiments is now presented with reference to FIG. **1.** Glass furnace **1** is shown filled with molten glass **2** up to a level **5.** Molten glass continuously exits the furnace through an orifice **4,** called the throat. The rate of molten glass flow **3** is critical to proper performance of downstream forming machines (e.g., molten glass flows into a bottle making machine that runs a constant mass feed rate. For a given bottle size and machine speed, the mass rate will be constant. Periodically the machine setup is converted a different bottle size and speed, then the mass rate will change (then fixed at the new production rate)), so it must be carefully controlled. The flow rate through the orifice **4** is due to gravity, so it is dependent on the level **5** of glass in the furnace and the viscosity of the molten glass. To this end, the glass level **5** -must be carefully controlled to remain constant as raw material is fed at **6** into the furnace **1** and molten glass flows out of the furnace **1.** A level measurer **7** may be provided to measure the glass level. The level measurer **7** can be based on one of several technical principles, e.g. mechanical, optical (e.g., laser), sound (e.g., radar), etc. In certain embodiments, the device generates an electrical signal **8** proportional to or indicative of the glass level **5** in the glass furnace **1.**

In certain embodiments, a feeder **9,** such as a mechanical feeder is provided to continuously feed material **6** into the furnace **1.** The feeder **9** can be, for example, a screw feeder (shown), a vibrating feeder, a mechanical pusher, etc. The feeder may be equipped with a feeder driver **10,** such as the motor shown, that can be adjusted such as by a variable intensity device D3 to vary the feed rate **6.** An electrical driver **16,** such as a variable frequency inverter, energizes driver **10** to variable speed operation, thus varying feed rate **6.** A controller C3 is provided and is in electrical communication with the level measurer **7** and the variable intensity drive D3 to receive the electrical signal **8** indicative of the glass level **5** and issue speed command **19** to the variable intensity drive **D3.** A set point **18** of glass level is established by the operator such as based on furnace design, $SP_{gl}$ and is inputted into a processor of the controller **C1.** If the measured level signal **8** is greater than set point $SP_{gl}$, then controller **C1** is programmed to decrease speed command **19** to the variable intensity drive **D3.** If the measured level signal **8** is less than the set point SPgl, then the controller **C1** is programmed to increase speed command **19** to the variable intensity drive **D3.** In this way, the speed of driver **10** will be adjusted up or down until the level **5** in furnace **1** is at the desired point.

In certain embodiments, this is done with an algorithm termed PID control, which is well known in the industry, using a Process Variable (PV), Control Variable (CV) and Set Point (SP). In certain embodiments:

- Process Variable (PV) is the glass level signal 8
- Control Variable (CV) is the speed command **19**
- Set point (SP) is $SP_{gl}$ **18.**

In certain embodiments, discharge hopper **11** contains material **12** and is configured (e.g., in communication with feeder 9) to provide material **12** to feeder **9** as required. During operation, it is important that hopper **11** always contain material **12** and not run empty. Level measurer **14** associated with hopper **11** measures the level **13** of material **12** in hopper **11.** Such devices can be for example, mechanical-based, sound-based (e.g., radar), optical-based (e.g., laser), a load cell, etc. Level measurer **14** generates a signal **15** (e.g., an electrical signal) proportional to or indicative of the measured level **13.**

In certain embodiments, hot inlet gases **40** enter heat exchanger **45** and are passed through one or more tubes **42** of rotatable chamber **21,** as shown at **41.** Cooled gases **43** exit the one or more tubes **42** and are directed out of the heat exchanger **45** as shown by arrow **44.** As infeed material **31** at an initial temperature of 20°C, for example, is heated in the heat exchanger **45,** water is boiled from the material **31** and water vapor is continually added to the inside of the rotatable chamber **21,** building pressure inside. Discharge plenum **26** in fluid communication with the rotatable chamber **21** serves to collect the discharged material mixture **25** and direct it to hopper **11** such as through chute **27.** In certain embodiments, this plenum **26** is sealed to outlet cylinder **24** and to hopper **12** to prevent air infiltration or leakage out of water vapor. The pressure generated by the creation of water vapor causes water vapor 28 (steam) to be vented from port **29.**

After the water is evaporated from the material **20** in rotatable chamber **21,** heat transferred from flowing hot gases at **41, 43** will provide sensible heat to the material **20** and the temperature of material **20** will increase. As the temperature of material **20** increases, impurities from the Post-Consumer Recycle cullet in the material will volatilize, creating organic fumes and aerosols. The organic fumes and aerosols will accumulate inside rotatable chamber **21** and be vented as shown by arrow **28** along with water vapor out of port **29.** If material **20** is heated to greater than 300°C, virtually all the organic impurities in the Post-Consumer Recycle cullet will be volatilized into organic fumes and aerosols and the heated material mixture 6 fed into the furnace will be free or essentially free of organic impurities.

Feeder **30** feeds material **31** into the rotatable chamber **21.** Infeed hopper **46** contains material **47,** delivered periodically by conveyor system **48** or the like from other material handling equipment (not shown). Feeder **30** is equipped with variable drive equipment to allow the feed rate of infeed material **31** to be varied. This infeed rate will be adjusted to maintain a specified amount $m_c$ of material **20** in the rotatable chamber **21.** The example described here is for a rotatable auger **52** screw feeder with motor **50,** but other types of feeders could be employed, such as a vibratory feeder or mechanical pusher, for example.

Feeder **30** is driven by motor M2. Motor M2 is equipped with or associated with a variable frequency drive D2 that specifies rotation of the screw feed auger and allows it to be varied. A controller C2 provides a speed command **54** to drive D2. As determined above, the rotatable chamber motor torque $T_m$ is directly and monotonically related to the amount of material $m_c$ in the rotatable chamber **21.** As such, the feeder **30** speed is controlled to maintain a constant value of $T_m$, thus also controlling to maintain constant $m_c$. As an example we detail a PID controller to achieve such purpose where:

PV = torque signal **55**
CV = speed command **54**

SP = **58** torque level corresponding to desired $m_c$ according to the data in FIG. **4,** which is programmed in the a processor associated with controller **C2.**

For example, with reference to FIG. **4,** for a desired amount **56** of 10000 kg in the rotatable chamber **21,** the motor torque set point **58** will be 150 N-m. Then motor **50** speed **54** will be adjusted downward if torque signal **55** is above the torque set point **58.** Motor **50** speed will be adjusted upward if torque signal **55** is below the torque set point **58.**

Discharge Hopper **11** contains material **12** configured (e.g., in communication with feeder **9)** to provide material to feeder **9** as required. During operation, it is important that hopper **11** always contain material **12** and not run empty. Level measurer **14** measures level **13** of material **12** in hopper **11.** Such devices can be, for example, mechanical-based, sound-based (e.g., radar), optical-based (e.g., laser), a load cell, etc. Level measurer **14** generates a signal **15,** such as an electrical signal, proportional to or indicative of the measured level **13.**

As described previously, rotatable chamber **21** delivers material to the discharge hopper **11** at discharge rate Rd. If the depth of material in the chamber **21** is constant, the discharge rate **25** is proportional to the rotational rate $\omega_c$ (revolutions per minute, rpm) of the rotatable chamber **21.** A controller C1 is provided to (e.g., is in electrical communication with the level measurer 14) level signal **15** and produce a speed command **62** to drive D1. The chamber **21** rotational speed may be controlled to maintain a constant value of $L_h$. As an example we detail a PID controller to achieve such purpose where:

PV = level signal **15**
CV = speed command **62**
SP = **63** hopper level corresponding to desired point

Then motor **38** speed **62** will be adjusted downward if level signal **15** is above the level set point **63.** Motor **38** speed will be adjusted upward if level signal **15** is below the set point **63.**

## Claims

1. A control system for controlling the amount of material fed to a glass furnace from a rotatable chamber of a rotary heat-exchanger having a rotatable chamber variable frequency drive in communication with a rotatable chamber motor for rotating said rotatable chamber, the control system comprising:

   a material feeder in communication with said rotatable chamber;
   a driver for said material feeder including a feeder variable frequency drive and a feeder motor associated with the feeder variable frequency drive;
   a controller in communication with said feeder variable frequency drive and with said chamber variable frequency drive and configured to modify the speed of said material feeder in response to a signal generated by said chamber variable frequency drive indicative of a torque required to rotate said rotatable chamber.

2. A control system for controlling the amount of material fed to a glass furnace from a rotatable chamber of a rotary heat-exchanger wherein a discharge hopper is in communication with said rotatable chamber having a rotatable chamber variable frequency drive in communication with a rotatable chamber motor for rotating said rotatable chamber and with said glass furnace, said control system comprising:

a hopper level measurer configured to measure the level of said material in said discharge hopper;
wherein said controller is in communication with said hopper level measurer and with said rotatable chamber variable frequency drive and is configured to modify the speed of said rotatable chamber in response to a signal generated by said hopper level measurer indicative of the level of said material in said discharge hopper.

3. The control system of claim 1, further comprising:

a glass furnace measure leveler configured to measure the level of said material in said glass furnace; and
a glass furnace feeder in communication with said discharge hopper and with said glass furnace and having a glass furnace feeder driver;
wherein said controller is in communication with said glass furnace level measurer and with said glass furnace feeder driver and is configured to modify the speed of said glass furnace feeder driver in response to a signal generated by said glass furnace measure leveler indicative of the level of said material in said glass furnace.

4. The control system of claim 1, further comprising a discharge hopper in communication with said rotatable chamber and with said glass furnace, said control system still further comprising:

a hopper level measurer configured to measure the level of said material in said discharge hopper;
wherein said controller is in communication with said hopper level measurer and with said rotatable chamber variable frequency drive and is configured to modify the speed of said rotatable chamber in response to a signal generated by said hopper level measurer indicative of the level of said material in said discharge hopper.

5. The control system of claim 4, further comprising:

a glass furnace measure leveler configured to measure the level of said material in said glass furnace; and
a glass furnace feeder in communication with said discharge hopper and with said glass furnace and having a glass furnace feeder driver;
wherein said controller is in communication with said glass furnace level measurer and with said glass furnace feeder driver and is configured to modify the speed of said glass furnace feeder driver in response to a signal generated by said glass furnace measure leveler indicative of the level of said material in said glass furnace.

6. A method for controlling the amount of material fed to a glass furnace from a rotatable chamber of a rotary heat-exchanger having a rotatable chamber variable frequency drive in communication with a rotatable chamber motor for rotating said rotatable chamber, the method comprising:

generating a signal with said chamber variable frequency drive indicative of a torque required to rotate said rotatable chamber;
driving a material feeder having a feeder variable frequency drive and a motor associated with said variable frequency drive to feed said material into said rotatable chamber;
controlling the speed of said material feeder with said variable frequency drive in response to the sensed signal indicative of said torque.

7. The method of claim 6, wherein a discharge hopper is in communication with said rotatable chamber and with said glass furnace, said method further comprising:

measuring the level of said material in said discharge hopper; and
controlling the speed of said rotatable chamber in response to a signal generated by said hopper level measurer indicative of the level of said material in said discharge hopper by controlling said chamber variable frequency drive.

8. The method of claim 6, further comprising:

measuring the level of said material in said glass furnace; and
feeding said material into said glass furnace with a glass furnace feeder in communication with said discharge hopper and with said glass furnace, said glass furnace feeder having a glass furnace feeder driver; and controlling the speed of said glass furnace feeder driver in response to said measured level of material in said glass furnace.

9. The method of claim 7, further comprising:

measuring the level of said material in said glass furnace; and
feeding said material into said glass furnace with a glass furnace feeder in communication with said discharge hopper and with said glass furnace, said glass furnace feeder having a glass furnace feeder driver; and controlling the speed of said glass furnace feeder driver in response to said measured level of material in said glass furnace.

10. A method for controlling the amount of material fed to a glass furnace from a rotatable chamber of a rotary heat-exchanger wherein a discharge hopper is in communication with said rotatable chamber having a rotatable chamber variable frequency drive in communication with a rotatable chamber motor for rotating said rotatable chamber and is in communication with said glass furnace, said method comprising:

measuring the level of said material in said discharge hopper; and
controlling the speed of said rotatable chamber in response to a signal generated by said hopper level measurer indicative of the level of said material in said discharge hopper by controlling said chamber variable frequency drive.

11. The method of claim 10, further comprising:

measuring the level of said material in said glass furnace; and
feeding said material into said glass furnace with a glass furnace feeder in communication with said discharge hopper and with said glass furnace, said glass furnace feeder having a glass furnace feeder driver; and controlling the speed of said glass furnace feeder driver in response to said measured level of material in said glass furnace.

FIG. 1

FIG. 2A

SECTION A-A

FIG. 2B

SECTION A-A

# FIG. 3A

SECTION A-A

# FIG. 3B

FIG. 4

FIG. 5

Europäisches
Patentamt
European
Patent Office
Office européen
des brevets

## EUROPEAN SEARCH REPORT

Application Number

EP 25 21 7209

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2024/383792 A1 (ALEXANDER JEFFREY C [US]) 21 November 2024 (2024-11-21) * paragraphs [0113], [0114], [0116], [0131], [0155]; claims; figure 2 * | 1-11 | INV. C03B3/02 C03B5/00 C03B5/24 F27D17/18 F28D7/16 F28F5/02 |

TECHNICAL FIELDS
SEARCHED      (IPC)

C03B
F27B
F28B
F27D
F28D
F28F

The present search report has been drawn up for all claims

| Place of search | Date of completion of the search | Examiner |
|---|---|---|
| The Hague | 26 March 2026 | Creux, Sophie |

EPO FORM 1503 03.82 (P04C01)

**EP 4 748 803 A1**

## ANNEX TO THE EUROPEAN SEARCH REPORT
## ON EUROPEAN PATENT APPLICATION NO.

EP 25 21 7209

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| US 2024383792 A1 | 21-11-2024 | EP 4129935 A2 | 08-02-2023 |
| | | US 2023038523 A1 | 09-02-2023 |
| | | US 2024383792 A1 | 21-11-2024 |

EPO FORM P0459

For more details about this annex : see Official Journal of the European Patent Office, No. 12/82

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63725139
- US 12084375 B